(19) Europäisches Patentamt
European Patent Office
Office européen des brevets

(11) **EP 4 576 267 A1**

(12) **EUROPEAN PATENT APPLICATION**

(43) Date of publication:
**25.06.2025 Bulletin 2025/26**

(21) Application number: **23307356.8**

(22) Date of filing: **22.12.2023**

(51) International Patent Classification (IPC):
*H01M 4/62* (2006.01)   *H01M 4/04* (2006.01)
*H01M 4/131* (2010.01)   *H01M 4/136* (2010.01)
*H01M 4/1391* (2010.01)   *H01M 4/1397* (2010.01)
*H01M 4/485* (2010.01)   *H01M 4/505* (2010.01)
*H01M 4/525* (2010.01)

(52) Cooperative Patent Classification (CPC):
H01M 4/622; H01M 4/0435; H01M 4/131;
H01M 4/136; H01M 4/1391; H01M 4/1397;
H01M 4/485; H01M 4/505; H01M 4/525

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **ARKEMA FRANCE**
**92800 Puteaux (FR)**

(72) Inventors:
• **FUKUYAMA, Takehiro**
  **KYOTO, 600-8815 (JP)**
• **BASSET, Maud**
  **60550 VERNEUIL EN HALATTE (FR)**
• **ZAHOUILY, Soraya**
  **KYOTO, 600-8815 (JP)**

(74) Representative: **Arkema Patent**
**Arkema France**
**DRD-DPI**
**51, Esplanade du Général de Gaulle**
**CS 10478**
**92907 Paris La Défense Cedex (FR)**

(54) **BINDER FOR DRY PROCESS ELECTRODE PREPARATION**

(57)    The present invention relates to a dry composition comprising at least one active material, at least one binder, optionally at least one conductive agent, characterized in that said at least one binder comprises, preferably consists of, a polyamide thermoplastic polymer.

EP 4 576 267 A1

**Description**

**Technical field**

The present invention relates generally to the field of electrical energy storage in the lithium storage batteries of Li-ion type. More specifically, the invention relates to a composition for a dry-coated electrode for Li-ion battery. Another aspect of the invention is a process for making an electrode using said composition. The invention also relates to lithium-ion batteries manufactured by incorporating said electrode.

**Background of the invention**

An elementary cell of a Li-ion storage battery or lithium battery comprises an anode (at discharge), and a cathode (likewise at discharge) generally made of a lithium insertion compound of metal oxide type, such as $LiMn_2O_4$, $LiCoO_2$ or $LiNiO_2$, between which is inserted an electrolyte which conducts lithium ions.

Rechargeable or secondary cells are more advantageous than primary (non-rechargeable) cells because the associated chemical reactions that take place at the positive and negative electrodes of the battery are reversible. The electrodes of secondary cells can be regenerated several times by applying an electrical charge. Many advanced electrode systems have been developed to store electrical charge. At the same time, much effort has been devoted to the development of electrolytes capable of improving the capabilities of electrochemical cells.

For their part, the electrodes generally comprise at least one current collector on which is deposited, in the form of a film, a composite material consisting of a so-called active material because it has an electrochemical activity with respect to lithium, a polymer which acts as a binder, plus one or more electronically conductive additives which are generally carbon black or acetylene black, and optionally a surfactant.

Binders are counted among the so-called inactive components because they do not directly contribute to the cell capacity. However, their key role in electrode processing and their considerable influence on the electrochemical performance of electrodes have been widely described. The main relevant physical and chemical properties of binders are the thermal stability, the chemical and electrochemical stability, tensile strength (strong adhesion and cohesion), and flexibility. The main objective of using a binder is to form stable networks of the solid components of the electrodes, i.e. the active materials and the conductive agents (cohesion). In addition, the binder must ensure close contact of the composite electrode to the current collector (adhesion).

Poly(vinylidene fluoride) (PVDF) is used binder in lithium-ion batteries because of its excellent electrochemical stability, good bonding capability and high adhesion to electrode materials and current collectors. PVDF can only be dissolved in certain organic solvents such as N-Methyl pyrrolidone (NMP), which is volatile, flammable, explosive, and highly toxic, leading to serious environment concern. Indeed, in the wet slurry process, active materials and binders are dispersed in a liquid solution. The liquid utilized are usually organic solvents or water. The dispersion is cast on a current collector then dried in a high temperature oven to produce an electrode. In this process, a high amount of energy is needed to dry out the liquid components of the slurry and organic solvents additionally produce harmful vapors which require special equipment to prevent free emission to the environment.

Compared to the conventional wet-suspension electrode manufacturing method, dry (solvent-free) manufacturing processes are simpler; these processes eliminate the emission of volatile organic compounds and offer the possibility of manufacturing electrodes with higher thicknesses (>120$\mu$m), with a higher energy density of the final energy storage device. The change in production technology will have little impact on the active material of the electrodes, however, the polymer additives responsible for the mechanical integrity of the electrodes must be adapted to the new manufacturing conditions.

US 2019/0305316 discloses dry process electrode films including a microparticulate non-fibrillizable binder having certain particle sizes and a method to obtain a film flexible enough to handle for a roll-to-roll process by using fibrillizable binders. However, the fibrillizable binders require an extra shearing in addition to dispersing the components. This consumes high energy and destructive against the active materials. It is also known from US 2020/0313193 dry-process electrode films including an elastic polymer binder wherein the dry-electrode film is free standing and comprises at most an insubstantial amount of polytetrafluoroethylene. US 2020/0313193 mainly discloses polyethylene, as elastic polymer binder, which is not electrochemically stable enough for use in both cathode and anode of the lithium-ion secondary batteries.

Therefore, there is still a need to develop new electrode compositions for Li-ion batteries that are suitable for processing without the use of organic solvents.

**Summary of the invention**

In a first aspect, the present invention provides a dry composition comprising at least one active material, at least one binder, optionally at least one conductive agent, characterized in that said at least one binder comprises, preferably consists of, a polyamide thermoplastic polymer. It has been found that by using a polyamide powder as binder, electrodes for lithium-ion batteries having direct adhesion to current collectors can be obtained by dry process. Hence, the use of expensive adhesive layer may be avoided.

In a preferred embodiment, said polyamide thermoplastic polymer has an average particle size lower than 50 $\mu$m measured according to the Standard ISO 13319.

In a preferred embodiment, said polyamide thermoplastic polymer is selected from the group consisting of PA 6, PA 11, PA 12, PA 6.10, PA 6.12, PA 6.14, PA 6.18, PA 10.10, PA 10.12, copolyamides, and mixtures thereof.

In a preferred embodiment, said polyamide thermoplastic polymer is selected from the group consisting of copolyamides using monomers 6.10, 6.12, 6.14, 6.18, 10.10 and 10.12 and mixtures thereof.

In a preferred embodiment, said at least one active material is selected from the group consisting of $LiCoO_2$, $Li(Ni,Co,Al)O_2$, $Li_{(1+x)}Ni_aMn_bCo_c$ (x represents a real number of 0 or more, a=0.9, 0.8, 0.6, 0.5, or 1/3, b=0.05, 0.1, 0.2, 0.3, or 1/3, c=0.05, 0.1, 0.2, or 1/3), $LiNiO_2$, $LiMn_2O_4$, $LiCoMnO_4$, $Li_3NiMn_3O_3$, $Li_3Fe_2(PO_4)_3$, $Li_3V_2(PO_4)_3$, a different element-substituted Li Mn spinel having a composition represented by $Li_{(1+x)}Mn_{(2-x-y)}M_yO_4$, wherein M represents at least one metal selected from Al, Mg, Co, Fe, Ni, and Zn, x and y independently representing a real number between 0 to 2, lithium titanate $Li_xTiO_y$ wherein x and y independently representing a real number between 0 to 2, and a lithium metal phosphate having a composition represented by $LiMPO_4$, M representing Fe, Mn, Co or Ni.

In another preferred embodiment, said at least one active material is selected from the group consisting of lithium metal, lithium alloy, a metal oxide, a carbon material such as graphite or hard carbon, silicon, a silicon alloy, and $Li_4TiO_{12}$.

In a preferred embodiment, the dry composition has the following mass composition:

a. 50% to 99,9% of said at least one active material, preferably 50% to 99%,
b. 0% to 25% of said at least one conductive agent, preferably 0.5% to 25%,
c. 0.1% to 25% of said at least one binder, preferably 0.5% to 25%,
d. 0% to 5% of at least an additive selected from the group consisting of plasticizer, ionic liquid, dispersing agent for conductive additive, and flowing aid agent;

the sum of all these percentages being 100%.

In another aspect, the present invention provides a film comprising, preferably consisting of, the dry composition according to the present invention.

In another aspect, the present invention provides a dry-coated electrode comprising the dry composition according to the present invention coated on a substrate, preferably on the current collector, by a solventless process.

In a preferred embodiment, said dry-coated electrode wherein the dry composition is in the form of a film having a density range from 1.40 g/cc to 1.65 g/cc when the active material, comprised in the dry composition, is selected from the group consisting of lithium metal, lithium alloy, a metal oxide, a carbon material such as graphite or hard carbon, silicon, a silicon alloy, and $Li_4TiO_{12}$.

In another preferred embodiment, said dry-coated electrode wherein the dry composition is in the form of a film having a density greater than 1.65 g/cc when the active material, comprised in the dry composition, is selected from the group consisting of $LiCoO_2$, $Li(Ni,Co,Al)O_2$, $Li_{(1+x)}Ni_aMn_bCo_c$ (x represents a real number of 0 or more, a=0.9, 0.8, 0.6, 0.5, or 1/3, b=0.05, 0.1, 0.2, 0.3, or 1/3, c=0.05, 0.1, 0.2, or 1/3), $LiNiO_2$, $LiMn_2O_4$, $LiCoMnO_4$, $Li_3NiMn_3O_3$, $Li_3Fe_2(PO_4)_3$, $Li_3V_2(PO_4)_3$, a different element-substituted Li Mn spinel having a composition represented by $Li_{(1+x)}Mn_{(2-x-y)}M_yO_4$, wherein M represents at least one metal selected from Al, Mg, Co, Fe, Ni, and Zn, x and y independently representing a real number between 0 to 2, lithium titanate $Li_xTiO_y$ wherein x and y independently representing a real number between 0 to 2, and a lithium metal phosphate having a composition represented by $LiMPO_4$, M representing Fe, Mn, Co or Ni.

In another aspect, the present invention provides a process for preparing the dry-coated electrode of the present invention comprising the steps of dry mixing at least one active material, at least one binder, optionally at least one conductive agent to provide an electrode formulation ; depositing sad electrode formulation on a substrate by a solvent less process to obtain a Li-ion battery electrode; consolidation of said electrode by thermo-mechanical treatment carried out at a temperature ranging from 50°C below the melting temperature of the binder up to 50°C above the melting temperature of the binder.

In another aspect, the present invention provides a process to prepare a dry-coated electrode according to the present invention comprising the steps of dry mixing at least one active material, at least one binder, optionally at least one conductive agent to provide an electrode formulation; processing said electrode formulation at a temperature of from 50°C to 220°C to form a free standing film, and laminating said free standing film on a current collector. In another aspect, the present invention provides a Li-ion battery comprising a positive electrode, a negative electrode and a separator, wherein at least one of the electrodes is a dry-coated electrode according to the present invention.

## Detailed description of the present invention

In a first aspect of the present invention, a dry composition is provided. Said dry composition comprises at least one active material and at least one binder. Said at least one binder comprises a polyamide thermoplastic polymer. In a preferred embodiment, said at least one binder consists of a polyamide thermoplastic polymer. In another preferred embodiment said at least one binder comprises a polyamide thermoplastic polymer and a polymer P1 as defined in the present application.

In the dry composition, said at least one active material and said at least one binder are in the form of powder. As mentioned above the use of polyamide thermoplastic polymer enhances the adhesion of the dry composition on the current collector and the efficiency of the electrode made thereof is improved.

The Dv50 is the particle size at the 50th percentile (in volume) of the cumulative size distribution of particles. This parameter is determined by laser granulometry. A Malvern INSITEC System particle size analyzer is used for the measurement. This is done in the dry process by laser diffraction on a powder with a focal of 100 mm. This applies to all Dv50 recited in the present description.

The Dv90 is the particle size at the 90th percentile (in volume) of the cumulative size distribution of particles. This parameter is determined by laser granulometry. A Malvern INSITEC System particle size analyzer is used for the measurement. This is done in the dry process by laser diffraction on a powder with a focal of 100 mm. This applies to all Dv90 recited in the present description.

Said dry composition may optionally comprise at least one conductive additive. The conductive additives comprise of one or more material that can improve conductivity. Some examples include carbon blacks such as acetylene black, Ketjen black; carbon fibers such as carbon nanotube, carbon nanofiber, vapor growth carbon fiber; metal powders such as SUS powder, and aluminum powder.

As mentioned above, the dry composition comprises at least one active material.

If the electrode to be prepared is a negative electrode, said active material may be selected from the group consisting of lithium metal, lithium alloy, a metal oxide, a carbon material such as graphite or hard carbon, silicon, a silicon alloy, and $Li_4TiO_{12}$ or mixtures thereof.

Alternatively, if the electrode to be prepared is a positive electrode, said active material may be selected from the group consisting of $LiCoO_2$, $Li(Ni,Co,Al)O_2$, $Li_{(1+x)}Ni_aMn_bCo_c$ (x represents a real number of 0 or more, a=0.9, 0.8, 0.6, 0.5, or 1/3, b=0.05, 0.1, 0.2, 0.3, or 1/3, c=0.05, 0.1, 0.2, or 1/3), $LiNiO_2$, $LiMn_2O_4$, $LiCoMnO_4$, $Li_3NiMn_3O_3$, $Li_3Fe_2(PO_4)_3$, $Li_3V_2(PO_4)_3$, a different element-substituted Li Mn spinel having a composition represented by $Li_{(1+x)}Mn_{(2-x-y)}M_yO_4$, wherein M represents at least one metal selected from Al, Mg, Co, Fe, Ni, and Zn, x and y independently representing a real number between 0 to 2, lithium titanate $Li_xTiO_y$ wherein x and y independently representing a real number between 0 to 2, and a lithium metal phosphate having a composition represented by $LiMPO_4$, M representing Fe, Mn, Co, or Ni, or mixtures thereof.

In addition, the surface of each of the above-described materials may be coated. The coating material is not particularly limited as long as it has lithium-ion conductivity and contains a material capable of being maintained in the form of a coating layer on the surface of the active material. Examples of the coating material include $LiNbO_3$, $Li_4Ti_5O_{12}$, and $Li_3PO_4$.

The shape of the active material is not particularly limited but is preferably particulate.

## Polyamide thermoplastic polymer

Polyamide (homopolyamide or copolyamide abbreviated CoPA) refers to the polymerization or condensation products of the same monomer (in the case of homopolyamides) or of several different monomers (in the case of CoPAs) selected from:

- amino acids or aminocarboxylic acids monomers, and preferably alpha,omega-aminocarboxylic acids monomers;
- lactam-like monomers with between 3 and 18 carbon atoms on the main ring that can be substituted;
- "diamine.diacid" monomers resulting from the reaction between an aliphatic diamine with 4 to 18 carbon atoms and a carboxylic diacid with between 4 and 18 carbon atoms; and
- mixtures thereof, with monomers with different carbon numbers in the case of copolyamides formed by mixing an amino acid monomer with a lactam monomer.

The term 'monomer' in this description of copolyamides refers to 'recurring unit'. Indeed, the case where a recurring unit of the PA consists of a diacid with a diamine is a particular embodiment. It is considered to be the combination of a diamine and a diacid, i.e. the diamine-diacid pair (in equimolar quantity), which corresponds to the monomer. This is due to the fact that individually, the diacide or diamine is only a structural unit, which is not sufficient on its own to polymerize.

Amino acid-type monomers:

Examples of alpha-amino acids include those with 4 to 18 carbon atoms, such as aminocaproic acid, amino-7-heptanoic acid, amino-11-undecanoic acid, n-heptyl-11-aminoundecanoic acid and amino-12-dodecanoic acid.

Lactam-like monomers:

Examples of lactams include those with 3 to 18 carbon atoms on the main ring that can be substituted. Examples include $\beta,\beta$-dimethylpropriolactam, $\alpha,\alpha$-dimethylpropriolactam, amylolactam, caprolactam (also known as lactam 6), capryllactam (also known as lactam 8), oenantholactam, 2-pyrrolidone and lauryl lactam (also known as lactam 12).

"Diamine.diacide" monomers:

Examples of dicarboxylic acid include acids with between 4 and 18 carbon atoms. Examples include adipic acid, sebacic acid, azelaic acid, suberic acid, isophthalic acid, butanedioic acid, 1,4-cyclohexyldicarboxylic acid, terephthalic acid, sodium or lithium salt of sulphoisophthalic acid, dimerized fatty acids (these dimerized fatty acids have a dimer content of at least 98% and are preferably hydrogenated) and dodecanedioic acid $HOOC-(CH_2)_{10}-COOH$.

Examples of diamines include aliphatic diamines with 4 to 18 atoms, which can be aryl and/or saturated cyclic. Examples include hexamethylenediamine, piperazine, tetramethylene diamine, octamethylene diamine, decamethylene diamine, dodecamethylene diamine, 1,5-diaminohexane, 2,2,4-trimethyl-1,6-diamino-hexane, diamine polyols, isophorone diamine (IPD), methyl pentamethylenediamine (MPDM), bis(aminocyclohexyl) methane (BACM), bis(3-methyl-4-aminocyclohexyl) methane (BMACM), methalylyenediamine, bis-p aminocyclohexylmethane and trimethylhexamethylene diamine.

Examples of diamine-diacid monomers are those resulting from the condensation of hexamethylene diamine with a C6 to C36 diacid, in particular the monomers: 6.6, 6.10, 6.11, 6.12, 6.14, 6.18. Examples include monomers resulting from the condensation of decanediamine with a C6 to C36 diacid, including the following monomers: 10.10, 10.12, 10.14, 10.18; or resulting from the condensation of decanediamine with terephthalic acid, i.e., the monomer 10.T.

Examples of copolyamides formed from the different types of monomers described above are copolyamides resulting from the condensation of two or more alpha omega aminocarboxylic acids or two lactams or one lactam and one alpha omega-aminocarboxylic acid. Other examples include copolyamides resulting from the condensation of at least one alpha omega aminocarboxylic acid (or lactam), at least one diamine and at least one dicarboxylic acid. Mention may also be made of copolyamides resulting from the condensation of an aliphatic diamine with an aliphatic carboxylic acid and at least one other monomer selected from among the aliphatic diamines different from the previous one and the aliphatic diacids different from the previous one.

Examples of copolyamides include caprolactam and lauryl lactam copolymers (PA 6/12), caprolactam, hexamethylene diamine and adipic acid copolymers (PA 6/6.6), copolymers of caprolactam, lauryl lactam, hexamethylene diamine and adipic acid (PA 6/12/6.6), copolymers of caprolactam, hexamethylene diamine and azelaic acid, 11-amino acid undecanoic, and lauryl lactam. (PA 6/6.9/11/12), copolymers of caprolactam, adipic acid and hexamethylene diamine, amino-11-undecanoic acid, lauryl lactam (PA 6/6.6/11/12), copolymers of hexamethylene diamine, azelaic acid, and lauryl lactam (PA 6.9/12), copolymers of 2-pyrrolidone and caprolactam (PA 4/6), copolymers of 2-pyrrolidone and lauryl lactam (PA 4/12), copolymers of caprolactam and undecanoic amino acid 11 (PA 6/11), copolymers of lauryl lactam and capryllactam (PA 12/8), copolymers of 11-amino acid undecanoic acid and 2-pyrrolidone (PA11/4), copolymers of capryllactam and caprolactam (PA 8/6), copolymers of capryllactam and 2-pyrrolidone (PA 8/4), copolymers of lauryl lactam and capryllactam (PA 12/8), copolymers of lauryl lactam and amino-11-undecanoic acid (PA 12/11).

Particularly said polyamide thermoplastic polymer is selected from the group consisting of polyamide 11 and polyamide 12 and copolyamides using monomers 6, 12, 6.10, 6.12, 6.14, 6.18, 10.10 and 10.12. More particularly, said polyamide thermoplastic polymer is selected from the group consisting of copolyamides using monomers 6, 12, 6.10, 6.12, 6.14, 6.18, 10.10 and 10.12. Although, in accordance with a preferred embodiment of the invention, the present invention is generally described in the present application with reference to a powder of copolyamides using monomers 6, 12, 6.10, 6.12, 6.14, 6.18, 10.10 and 10.12, PA12 and PA 11 (which has the additional advantage of being of renewable origin), the present invention is obviously not limited to these powders. The present invention includes any PA powder (homopolyamide or copolyamide) and in which the particles exhibit particle sizes Dv50 lower than 300 $\mu$m, preferably lower than 100$\mu$m and more preferably lower than 30$\mu$m.

The polyamide or copolyamide can be obtained by melt condensation of a single type of monomers or two different types of monomers as described above.

Some suitable polyamides or copolyamides are commercially available from ARKEMA under the trademark RILSAN®, Platamid®, or from EVONIK under the trademark VESTAMID® VESTAMELT®, or from EMS under the trademark GRILAMID®, GRILTEX®.

A polyamide, such as PA 12, or a copolyamide suitable according to the present invention can also be obtained by anionic polymerization of lactam(s) in solvent or in solution. Some suitable ones are commercially available under the trademark ORGASOL® from Arkema.

In a preferred embodiment, the melting temperature of said polyamide thermoplastic polymer is lower than 230°C, advantageously lower than 220°C, preferably lower than 210°C, more preferably lower than 200°C, most preferably lower than 190°C, in particular lower than 180°C, more in particular lower than 170°C, most in particular lower than 160°C. The melting temperature can be measured according to ISO 11357-3 Plastics - Differential scanning calorimetry (DSC) Part 3.

In a preferred embodiment, said polyamide thermoplastic polymer is amorphous or semi-crystalline. Preferably, said polyamide thermoplastic polymer is semi-crystalline.

In an embodiment, said polyamide thermoplastic polymer has a particle size distribution Dv50 lower than 60 μm, advantageously lower than 55 μm, preferably lower than 50 μm, more preferably lower than 45 μm, most preferably lower than 40 μm, in particular lower than 35 μm. In a preferred embodiment, said polyamide thermoplastic polymer has a particle size distribution Dv50 lower than 30 μm, advantageously lower than 28 μm, preferably lower than 26 μm, more preferably lower than 24 μm, most preferably lower than 22 μm, in particular lower than 20 μm, more particularly lower than 18 μm, most particularly lower than 16 μm. In a preferred embodiment, said polyamide thermoplastic polymer has a particle size distribution Dv50 lower than 14 μm, advantageously lower than 12 μm, preferably lower than 10 μm. The particle size Dv50 as called for in the present application allows to improve the efficiency of the electrode. The particle size distribution Dv50 of the polyamide thermoplastic polymer may be selected based on the particle size distribution Dv50 of said at least one active material to improve the adhesion to the current collector. For example, the ratio of said at least one active material Dv50 of the active material and of the Dv50 of said polyamide thermoplastic polymer ranges from 0.01 to 5, preferably from 0.05 to 4, in particular from 0.1 to 2.

In a preferred embodiment, said polyamide thermoplastic polymer has a particle size distribution Dv90 lower than 500μm, advantageously lower than 450 μm, preferably lower than 400 μm, more preferably lower than 350 μm, most preferably lower than 300 μm, in particular lower than 250 μm, more particularly lower than 200 μm, most particularly lower than 150 μm.

In a preferred embodiment, said polyamide thermoplastic polymer has a particle size distribution Dv90 lower than 100 μm, advantageously lower than 50 μm, preferably lower than 20 μm. The particle size Dv90 as called for in the present application allows to improve the efficiency of the electrode.

The inherent viscosity is measured using an Ubbelhode tube. The measurement is performed at 20°C on a 75 mg sample at a concentration of 0.5% (w/w) in m-cresol. The inherent viscosity is expressed as $(g/100\ g)^{-1}$ and is calculated according to the following formula:

$$\text{Inherent viscosity} = \ln(t_s/t_0) \times 1/C, \text{ wherein } C = m/p \times 100,$$

wherein $t_s$ is the flow time of the solution, $t_0$ is the solvent flow time, m is the mass of the sample and p is the mass of the solvent. This measurement corresponds to the ISO 307 standard, except that the measuring temperature is 20°C instead of 25°C.

The inherent viscosity of said polyamide thermoplastic polymer is lower than or equal to 1.2, advantageously lower than or equal to 1.1, preferably lower than or equal to 1.0, more preferably lower than or equal to 0.9 $(g/100\ g)^{-1}$.

In a preferred embodiment, said polyamide thermoplastic polymer has an average particle size, measured according to the Standard ISO 13319, lower than 50 μm, advantageously lower than 45 μm, preferably lower than 40 μm, more preferably lower than 35 μm, in particular lower than 30 μm, more particularly lower than 25 μm, most particularly lower than 20 μm. The use of a polyamide thermoplastic polymer having the average particle size mentioned herein allows to provide a better adhesion to the current collector.

Said polyamide thermoplastic polymer may have an average particle size, measured according to the Standard ISO 13319, greater than 0.5 μm, advantageously greater than 0.6 μm, preferably greater than 0.7 μm, more preferably greater than 0.8 μm, in particular greater than 0.9 μm, more particularly greater than 1.0 μm, most particularly greater than 1.5 μm.

In a preferred embodiment, said polyamide thermoplastic polymer may have an average particle size, measured according to the Standard ISO 13319, ranging from 0.5 μm to 50 μm, advantageously from 0.6 μm to 45 μm, preferably from 0.7 μm to 40 μm, more preferably from 0.8 μm to 35 μm, most preferably from 0.9 μm to 30 μm, in particular from 1.0 μm to 25 μm, more particularly from 1.5 μm to 20 μm.

In a preferred embodiment, said polyamide thermoplastic polymer has a melt viscosity lower than 1500 Pa.s measured at a temperature of 200°C and a shear rate of 1 Hz. Preferably, said polyamide thermoplastic polymer has a melt viscosity lower than 1400 Pa.s measured at a temperature of 200°C and a shear rate of 1 Hz ; more preferably said polyamide thermoplastic polymer has a melt viscosity lower than 1300 Pa.s measured at a temperature of 200°C and a shear rate of 1 Hz ; most preferably said polyamide thermoplastic polymer has a melt viscosity lower than 1200 Pa.s measured at a temperature of 200°C and a shear rate of 1 Hz; in particular said polyamide thermoplastic polymer has a melt viscosity lower than 1100 Pa.s measured at a temperature of 200°C and a shear rate of 1 Hz ; more particularly said polyamide thermoplastic polymer has a melt viscosity lower than 1000 Pa.s measured at a temperature of 200°C and a shear rate of 1 Hz. With such melt viscosity, the electrode film can be easily prepared at lower temperature.

Said binder may further comprise other polymers. For example, said binder may further comprise a polymer **P1** comprising recurring units derived from a monomer **M1** of formula $R^1R^2C=C(R^3)C(O)R$ (Ia) or $R^1R^2C=C(R^3)R''$ (Ib) wherein $R^1$, $R^2$ et $R^3$ are independently selected from the group consisting of H and $C_1$-$C_5$ alkyl; R'' is selected from the group consisting of $C_6$-$C_{12}$ aryl, $C(O)NH_2$ and CN ; R is selected from the group consisting of $-NHC(CH_3)_2CH_2C(O)CH_3$ and -OR' wherein R' is selected from the group consisting of H and $C_1$-$C_{18}$ alkyl optionally substituted by one or more functional groups -OH, $-CO_2H$, $-SO_3H$, $-PO_3H$, -OC(O)R''', -C(O)O-R''' or a five to ten-membered heterocycle comprising at least one nitrogen atom in the cyclic moiety ; R''' being selected from the group consisting of $C_1$-$C_6$ alkyl and $C_6$-$C_{12}$ aryl optionally substituted by one or more functional groups -OH, $-CO_2H$, $-SO_3H$, $-PO_3H$.

Said monomer **M1** may have the formula (Ia) $R^1R^2C=C(R^3)C(O)R$ wherein $R^1$, $R^2$ et $R^3$ are independently selected from the group consisting of H and $C_1$-$C_5$ alkyl ; R is selected from the group consisting of $-NHC(CH_3)_2CH_2C(O)$ $CH_3$ and -OR' wherein R' is selected from the group consisting of H and $C_1$-$C_{18}$ alkyl optionally substituted by one or more functional groups -OH, - $CO_2H$, $-SO_3H$, $-PO_3H$, -OC(O)R''', -C(O)O-R''' or a five to ten-membered heterocycle comprising at least one nitrogen atom in the cyclic moiety; R''' is selected from the group consisting of $C_1$-$C_6$ alkyl and $C_6$-$C_{12}$ aryl optionally substituted by one or more functional groups -OH, $-CO_2H$, $-SO_3H$, $-PO_3H$. Said heterocycle may be saturated or unsaturated or aromatic. Said heterocycle may be monocyclic or bicyclic. Said heterocycle may be pyrrole, pyrrolidine, pyridine, piperidine, pyrimidine, pyrazine, 1,4-dihydropyridine, indole, oxindole, isatine, quinolein, isoquinolein, quinazolin, imidazolin, pyrazolidin, 2-pyrrolidon, deltalactame, succinimide, 2-imidazolidinone, 4-imidazolidinone. Said heterocycle may be substituted by one or more $C_1$-$C_5$ alkyl groups. As mentioned above, $C_1$-$C_{18}$ alkyl group is optionally substituted by said heterocycle. The latter can be linked to the alkyl group by the nitrogen atom or any other atoms of the heterocycle. Preferably, said heterocycle is 2-pyrrolidone, delta-lactame, succinimide, 2-imidazolidinone, 4-imidazolidinone. Advantageously, said monomer **M1** can be of formula (Ia) $R^1R^2C=C(R^3)C(O)R$ wherein $R^1$, $R^2$ et $R^3$ are independently selected from the group consisting of H et $C_1$-$C_5$ alkyl; R is -OR' wherein R' is selected from the group consisting of H and $C_1$-$C_{18}$ alkyle optionally substituted by one or more functional groups -OH, $-CO_2H$, $-SO_3H$, $-PO_3H$, -OC(O)R''', -C(O)O-R''' or a five to ten-membered heterocycle comprising at least one nitrogen atom in the cyclic moiety; R''' is selected from the group consisting of $C_1$-$C_6$ alkyl or $C_6$-$C_{12}$ aryl optionally substituted by one or more functional groups -OH, $-CO_2H$, $-SO_3H$, $-PO_3H$. R' can be selected from the group consisting of H, methyl, ethyl, propyl, n-butyl, isobutyl, t-butyl, n-dodecyl, amyl, isoamyl, hexyl, 2-éthylhexyl, lauryl, n-octyl, hydroxyéthyl, hydroxybutyl, hydroxypropyl, 2-pyrrolidone, deltalactame, succinimide, 2-imidazolidinone, 4-imidazolidinone ethyl substituted by an ureido group. Preferably, said monomer **M1** is of formula (Ia) $R^1R^2C=C(R^3)C(O)R$ wherein $R^1$ and $R^2$ are H ; $R^3$ is H or $CH_3$ ; R is -OR' wherein R' i selected from the group consisting of H and $C_1$-$C_{18}$ alkyl optionally substituted by one or more functional groups -OH, $-CO_2H$, $-SO_3H$, $-PO_3H$, - OC(O)R''', -C(O)O-R'''; R''' being selected from the group consisting of $C_1$-$C_6$ alkyl or $C_6$-$C_{12}$ aryl optionally substituted by one or more functional groups -OH, $-CO_2H$, $-SO_3H$, $-PO_3H$. More preferably, said monomer **M1** is of formula (Ia) $R^1R^2C=C(R^3)C(O)R$ wherein $R^1$ and $R^2$ are H ; $R^3$ is H or $CH_3$ ; R is -OR' wherein R' is selected from the group consisting of H and $C_1$-$C_{15}$ alkyl optionally substituted by one or more functional groups -OH, $-CO_2H$, $-SO_3H$, $-PO_3H$, -OC(O)R''', - C(O)O-R'''; R''' being selected from the group consisting of $C_1$-$C_6$ alkyl or $C_6$-$C_{12}$ aryl optionally substituted by one or more functional groups -OH, $-CO_2H$, $-SO_3H$, $-PO_3H$. In particular, said monomer **M1** is of formula (Ia) $R^1R^2C=C(R^3)$ C(O)R wherein $R^1$ and $R^2$ are H ; $R^3$ is H or $CH_3$ ; R is - OR' wherein R' is selected from the group consisting of H and $C_1$-$C_{10}$ alkyl optionally substituted by one or more functional groups -OH, $-CO_2H$, $-SO_3H$, $-PO_3H$, -OC(O)R''', -C(O)O-R'''; R''' being selected from the group consisting of $C_1$-$C_6$ alkyl or $C_6$-$C_{12}$ aryl optionally substituted by one or more functional groups -OH, $-CO_2H$, $-SO_3H$, $-PO_3H$. More particularly, said monomer **M1** can be acrylic acid, methyl methacrylate, ethyl acrylate, propyl acrylate, n-butyl acrylate, isobutyl acrylate, t-butyl acrylate, n-dodecyl acrylate, amyl acrylate, isoamyl acrylate, hexyl acrylate, 2-ethylhexyl acrylate, diacetone acrylamide, lauryl acrylate, n-octyl acrylate, hydroxypropyl methacrylate, hydroxybutyl acrylate, methyl acrylic acid, methyl methacrylate, ethyl methacrylate, propyl methacrylate, n-butyl methacrylate, isobutyl methacrylate, t-butyl methacrylate, n-dodecyl methacrylate, amyl methacrylate, isoamyl methacrylate, hexyl methacrylate, 2-ethylhexyl methacrylate, lauryl methacrylate, n-octyl methacrylate, ureido methacrylate, monomers of formula $CH_2=CH(CO_2CH_2CH_2CO_2H)$, $CH_2=CH(CO_2CH_2CH_2-O-C(O)-CH_2CH_2CO_2H)$, $CH_2=CH(CO_2CH_2CH_2-O-C(O)-C_6H_4CO_2H)$, $CH_2=CH(CO_2CH_2CH_2CH_2CH(CO_2H)CH_2CH_2CO_2H)$ ; and mixtures thereof. Of these, said monomer **M1** with an alkyl group having 1 to 8 carbon atoms is preferred, and an alkyl group having 1 to 5 carbon atoms is more preferable.

Alternatively, said monomer **M1** may be of formula (Ib) $R^1R^2C=C(R^3)R''$ wherein $R^1$, $R^2$ et $R^3$ are independently selected from the group consisting of H and $C_1$-$C_5$ alkyl ; R'' is selected from the group consisting of $C_6$-$C_{12}$ aryl and CN. Preferably, said monomer **M1** is of formula (Ib) $R^1R^2C=C(R^3)R''$ wherein $R^1$, $R^2$ et $R^3$ are independently selected from the group consisting of H and $C_1$-$C_3$ alkyl; R'' is selected from the group consisting of $C_6$-$C_{12}$ aryl and CN.

Said polymer **P1** may also comprise recurring units derived from a monomer **M1b.** said monomer **M1b** may be:

- (A) an alkenyl compound containing a functional group, or
- (B) an alkenyl compound without functional group.

The alkenyl compound (A) containing a functional group comprises, for example, carboxylic acids $\alpha,\beta$-unsaturated such as fumaric acid, crotonic acid, itaconic acid and the like ; vinyl ester compounds such as vinyl acetate, neodecanoate vinyl and the like ; amide compounds such as acrylamide, methacrylamide, N-methylacrylamide, N-methylmethacrylamide, N-methylolacrylamide, N-methylolmethacrylamide, N-alkylacrylamide, N-alkylmethacrylamide, N,N-dialkylacrylamide, N,N-dialkylmethacrylamide, diacetone acrylamide and the like, sodium 2-acrylamido-2-methyl-1-propanesulfonate; acrylic acid esters such as 2-hydroxyethyl acrylate, N-dialkylaminoethyl acrylate, glycidyl acrylate, n-dodecyl acrylate, fluoroalkyl acrylate and the like ; methacrylic acid esters such as dialkylaminoethyl methacrylate, fluoroalkyl methacrylate, 2-hydroxyethyl methacrylate, n-octyl methacrylate, glycidyl methacrylate, ethylene glycol dimethacrylate and the like ; maleic anhydride, and alkenyl glycidyl ether compounds such as allyl glycidyl ether and the like. These compounds can be used alone or in a mixture of two or more. The alkenyl compound without a functional group (B) includes, for example, conjugated dienes such as 1,3-butadiene, isoprene and the like; divinyl hydrocarbon compounds such as divinyl benzene and the like.

Alternatively, said polymer **P1** may be selected from cellulose and a cellulose derivative. In some embodiments, said polymer **P1** is selected from at least one of cellulose, a cellulose ester, a cellulose ether, cellulose nitrate, a carboxyalkylcellulose and a cellulose salt. In some embodiments, said polymer **P1** is selected from at least one of cellulose, cellulose acetate, methylcellulose, ethylcellulose, hydroxylpropylcellulose (HPC), hydroxyethylcellulose (HEC), cellulose nitrate, carboxymethylcellulose (CMC), carboxyethylcellulose, carboxypropylcellulose, carboxyisopropylcellulose, sodium cellulose, sodium cellulose nitrate and sodium carboxyalkylcellulose. In some embodiments, said polymer **P1** may be carboxymethylcellulose (CMC).

Uses of the dry composition

The dry composition can be used to prepare an electrode. The latter can be prepared from a film made of the dry composition subsequently disposed on the current collector or the dry composition can be coated (by direct calendering or electrospray and calendering) on the current collector without the preparation of a free-standing film.

According to an embodiment, after the powder-mixing step, the electrode is manufactured by a solventless spraying process, by depositing the formulation on the metallic substrate, by a pneumatic spraying process, by electrostatic spraying, by dipping in a fluidized powder bed, by sprinkling, by electrostatic screen printing, by deposition with rotative brushes, by deposition with dosing rotative rolls, by calendering.

According to one embodiment, after the powder mixing step, the electrode is manufactured by a solvent-less process in two steps. A first step consists in manufacturing a free-standing film from the pre-mixed formulation with a thermo-mechanical process like extrusion, calendering or thermo-compression. In a second step, the free-standing film is laminated onto the metallic substrate by a process combining temperature and pressure like calendering or thermo-compression.

The dry composition of the present invention is useful to prepare a film. Hence, the present invention provides a film comprising, preferably consisting of, the dry composition of the present invention. In a preferred embodiment, for an anode composition, the film has a density lower than 1.65 g/cc, advantageously lower than 1.64 g/cc, preferably lower than 1.63 g/cc, more preferably lower than 1.62 g/cc, most preferably lower than 1.61 g/cc, in particular lower than 1.60 g/cc, more particularly lower than 1.59 g/cc, most particularly lower than 1.58 g/cc. In a preferred embodiment, the film has a density greater than 1.40 g/cc, advantageously greater than 1.41 g/cc, preferably greater than 1.42 g/cc, more preferably greater than 1.43 g/cc. An anode composition refers to a dry composition wherein the active material is an anode active material as detailed above.

In another embodiment, for a cathode composition, the film has a density greater than 1.65 g/cc, advantageously greater than 1.66 g/cc, preferably greater than 1.67 g/cc, more preferably greater than 1.68 g/cc, most preferably greater than 1.69 g/cc, in particular greater than 1.70 g/cc. A cathode composition refers to a dry composition wherein the active material is a cathode active material as detailed above.

The density is measure by cutting the film into 2 cm * 2 cm square, measuring the weight by a balance and then divide it by the volume of the film. The thickness of the film can be measured according to any known methods of the art using a spectrometer. It has been observed that by using a film having the density mentioned above, an improved high-rate capacity can be obtained.

Hence, a dry-coated electrode can be made using said film. The present invention therefore provides a process to prepare a dry-coated electrode according to the present invention comprising the steps of dry mixing at least one active material, at least one binder, optionally at least one conductive agent to provide an electrode formulation ; processing said electrode formulation at a temperature of from 50°C to 220°C, preferably from 80°C to 200°C, to form a free standing film, and laminated said free standing film on a substrate to form a laminated film coated on a substrate, preferably on a current collector.

The dry composition can also be used to prepare a dry-coated electrode by a solventless process. Hence, the present invention provides a dry-coated electrode comprising the dry composition of the present invention coated on a substrate by a solventless process, preferably said substrate is a current collector. A process to prepare a dry-coated electrode according to present invention comprises the steps of dry mixing at least one active material, at least one binder, optionally at least one conductive agent to provide an electrode formulation ; depositing said electrode formulation on a substrate by a solvent less process to obtain a Li-ion battery electrode; consolidation of said electrode by thermo-mechanical treatment carried out at a temperature ranging from 50°C below the melting temperature of the binder up to 50°C above the melting temperature of the binder. A thermo-mechanical treatment refers to the application of a temperature from 50°C below the melting temperature of the binder up to 50°C above the melting temperature of the binder, with mechanical pressure. The pressure applied during the thermo-mechanical treatment is generally lower than 1 kN/mm, preferably lower than 0.75 kN/mm, more preferably lower than 0.5 kN/mm. Such thermo-mechanical treatment can be done by for example a calendaring machine with heatable rolls or a plate-plate press which can also be heated as well.

The preferred thickness of an electrode is from 0.1 $\mu$m to 1000 $\mu$m, preferably from 0.1 $\mu$m to 300 $\mu$m.

The current collector may be also coated with a primer layer to improve the adhesion of the dry composition thereon. The primer layer may comprise a polymer selected from the group consisting of fluoropolymer and (meth)acrylic-based polymer or mixtures thereof. The primer layer may be coated on the current collector and the dry composition is subsequently coated on the primer layer. Said primer layer may also contain conductive materials selected from the group consisting of carbon blacks such as acetylene black, Ketjen black; carbon fibers such as carbon nanotube, carbon nanofiber, vapor growth carbon fiber; metal powders such as SUS powder, and aluminum powder. Preferably, the primer layer comprises between 10% to 60% of said conductive materials. Said primer layer may also contain inorganic fillers having a melting point of 200 deg.C or more and high electric insulating property and being electrochemically stable within the application range of a lithium-ion secondary battery. The inorganic fillers are selected from the group consisting of oxide ceramics such as alumina, silica, titania, zirconia, magnesia, ceria, yttria, zinc oxide, and iron oxide; nitride ceramics such as silicon nitride, titanium nitride, and boron nitride; ceramics such as silicon carbide, calcium carbonate, magnesium sulfate, aluminum sulfate, aluminum hydroxide, aluminum hydroxide oxide, potassium titanate, talc, kaolinite, dickite, nacrite, halloysite, pyrophyllite, montmorillonite, sericite, mica, amesite, bentonite, asbestos, zeolite, calcium silicate, magnesium silicate, diatomaceous earth and silica sand; and glass fiber. Preferably, the primer layer comprises between 10% to 80 % of said conductive materials. The (meth)acrylic-based polymer may be the polymer **P1** of formula (Ia) as defined in the present application. The fluoropolymer may comprise recurring units derived from a monomer selected from the group consisting of vinyl fluoride; vinylidene fluoride (VDF); trifluoroethylene (VF3); chlorotrifluoroethylene (CTFE); 1,2-difluoroethylene; tetrafluoroethylene (TFE); hexafluoropropylene (HFP); perfluoro(alkyl vinyl) ethers such as perfluoro(methyl vinyl)ether (PMVE), perfluoro(ethyl vinyl) ether (PEVE) and perfluoro(propyl vinyl) ether (PPVE); perfluoro(1,3-dioxole); perfluoro(2,2-dimethyl-1,3-dioxole) (PDD); monomer with the formula $CF_2=CFOCF_2CF(CF_3)OCF_2CF_2X$ where X is $SO_2F$, $CO_2H$, $CH_2OH$, $CH_2OCN$, or $CH_2OPO_3H$; monomer with formula $CF_2=CFOCF_2CF_2SO_2F$; the monomer with the formula $F(CF_2)nCH_2OCF=CF_2$ where n is 1, 2, 3, 4, or 5; the monomer with the formula $R^1CH_2OCF=CF_2$ in which $R^1$ is hydrogen or $F(CF_2)m$ and m is 1, 2, 3 or 4; the monomer with the formula $R^2OCF=CH_2$ in which $R^2$ is $F(CF_2)p$ and p is 1, 2, 3 or 4; trifluoropropene, tetrafluoropropene, hexafluoroisobutylene, perfluorobutylene, pentafluoropropene, bromotrifluoroethylene, chlorofluoroethylene, chlorotrifluoropropene and 2-trifluoromethyl-3,3,3-trifluoro-1-propene or a mixture thereof.

In another aspect, the present invention provides a Li-ion battery. Said Li-ion battery comprises a positive electrode, a negative electrode and a separator, wherein at least one of the electrodes is a dry-coated electrode according to the present invention. Said Li-ion battery may also comprise an electrolyte. The electrolyte may be selected from the group consisting of $LiCF_3SO_3$, $LiPF_6$, $LiClO_4$, $LiBF_4$, $LiB(C_2O_4)_2$, $LiN(SO_2F)_2$, $LiN(SO_2CF_3)_2$, $LiN(SO_2C_2F_3)_2$, $LiN(SO_2C_2F_3)_2$, $LiN(SO_2F)(SO_2CF_3)$, $LiN(SO_2F)(SO_2C_2F_5)$, $LiN(SO_2CF_3)(SO_2C_2F_5)$, $LiAsF_6$, $LiBF_2C_2O_4$, $LiNO_3$, $LiPF3(CF_2CF_3)_3$, LiBETI, LiTDI and mixtures thereof.

## **Examples**

### Example 1

158-C (graphite, BTR) having an average particle size of 16 $\mu$m and a copolyamide having an average particle size of from 5-15 $\mu$m (PA6.12 powder, Arkema) and a melt viscosity of 100 Pa.s measured at 200°C and a shear rate of 1 Hz were added to a mill with lid. The ratio of 158-C and Orgasol was 95/5 by weight. The materials were mixed for 30 sec. then rest for 30 min. This cycle was repeated for a total of 11 times. The mixed powder was applied onto a copper foil by an electrostatic screen printing equipment (TS-1, Berg Co., Ltd.) at 1 kV, 0.5 cm gap. Powder loading was 11.1 g/cm2 in a 6 cm x 6 cm size area. The powder was covered by SUS foil and passed through a roll press (SA-602, TESTER SANGYO CO., LTD.) where the top roll was heated to 80°C and the bottom roll was heated to 140°C at 0.5 m/min., with 6 kN roll pressure setting. Then the top roll was heated to 110°C and the bottom roll was heated up to 200°C and the electrode was passed through the rolls. Pressure was adjusted so the electrode density was ~1.48 g/cm3 after press. The electrode was punched out into $\Phi$10 circle then a half coin cell with Li metal was fabricated using PE membrane and glass mat as separator and 1 M LiPF6 in EC/EMC=3/7 vol % as electrolyte solution.

The capacity of the coin cell at the 2nd cycle was evaluated following the protocol below:

1st charge: CC-CV, 0.1 C to 10 mV taper to 0.05 C at 25°C
1st discharge: CC, 0.1 C to 2.5 V at 25°C
2nd charge: CC-CV, 0.2 C to 10 mV taper to 0.05 C at 25°C
2nd discharge: CC, 0.2 C to 2.5 V at 25°C

Result is detailed in table 1 below.

[table 1]

| 2nd charge capacity | 2nd discharge capacity | Efficiency |
|---|---|---|
| 320 mAh/g | 314 mAh/g | 98.4 % |

Comparative Example 1

Same process was applied as Example 1 but the binder was changed to a fluoropolymer having a melt viscosity of 7000 Pa.s measured at 230°C at a shear rate of 100 s$^{-1}$ and an average particle size of 20 $\mu$m and the press temperature was changed to top roll at 100°C and the bottom roll at 160°C at 0.5 m/min., with 6.0 kN roll pressure setting. There was no adhesion and film formation achieved after the roll press and coin cell could not be manufactured.

**Claims**

1. Dry composition comprising at least one active material, at least one binder, optionally at least one conductive agent, **characterized in that** said at least one binder comprises, preferably consists of, a polyamide thermoplastic polymer.

2. Dry composition according to the previous claim wherein said polyamide thermoplastic polymer has an average particle size lower than 50 $\mu$m measured according to the Standard ISO 13319.

3. Dry composition according to any of the previous claims wherein said polyamide thermoplastic polymer is selected from the group consisting of PA6, PA 11, PA 12, PA 6.10, PA 6.12, PA 6.14, PA 6.18, PA 10.10, PA 10.12, copolyamides, and mixtures thereof.

4. Dry composition according to any of the previous claims wherein said polyamide thermoplastic polymer is selected from the group consisting of copolyamides using monomers 6.10, 6.12, 6.14, 6.18, 10.10 and 10.12, and mixtures thereof.

5. Dry composition according to any one of the previous claims wherein said at least one active material is selected from the group consisting of $LiCoO_2$, $Li(Ni,Co,Al)O_2$, $Li_{(1+x)}Ni_aMn_bCo_c$ (x represents a real number of 0 or more, a=0.9, 0.8, 0.6, 0.5, or 1/3, b=0.05, 0.1, 0.2, 0.3, or 1/3, c=0.05, 0.1, 0.2, or 1/3), $LiNiO_2$, $LiMn_2O_4$, $LiCoMnO_4$, $Li_3NiMn_3O_3$, $Li_3Fe_2(PO_4)_3$, $Li_3V_2(PO_4)_3$, a different element-substituted Li Mn spinel having a composition represented by $Li_{(1+x)}Mn_{(2-x-y)}M_yO_4$, wherein M represents at least one metal selected from Al, Mg, Co, Fe, Ni, and Zn, x and y independently representing a real number between 0 to 2, lithium titanate $Li_xTiO_y$ wherein x and y independently representing a real number between 0 to 2, and a lithium metal phosphate having a composition represented by $LiMPO_4$, M representing Fe, Mn, Co or Ni.

6. Dry composition according to any one of the previous claims 1 to 5 wherein said at least one active material is selected from the group consisting of lithium metal, lithium alloy, a metal oxide, a carbon material such as graphite or hard carbon, silicon, a silicon alloy, and $Li_4TiO_{12}$.

7. Dry composition according to any one of the previous claims having the following mass composition:

   a. 50% to 99,9% of said at least one active material, preferably 50% to 99%,
   b. 0% to 25% of said at least one conductive agent, preferably 0.5% to 25%,
   c. 0.1% to 25% of said at least one binder, preferably 0.5% to 25%,
   d. 0% to 5% of at least an additive selected from the group consisting of plasticizer, ionic liquid, dispersing agent for conductive additive, and flowing aid agent;

   the sum of all these percentages being 100%.

8. Film comprising, preferably consisting of, the dry composition of any one of the previous claims.

9. Dry-coated electrode comprising the dry composition according to any one of the previous claims 1 to 7 coated on a substrate, preferably on the current collector, by a solventless process.

10. Dry-coated electrode according to the previous claim wherein the dry composition is in the form of a film having a density range from 1.40 g/cc to 1.65 g/cc when the active material, comprised in the dry composition, is selected from the group consisting of lithium metal, lithium alloy, a metal oxide, a carbon material such as graphite or hard carbon, silicon, a silicon alloy, and $Li_4TiO_{12}$.

11. Dry-coated electrode according to claim 9 wherein the dry composition is in the form of a film having a density greater than 1.65 g/cc when the active material, comprised in the dry composition, is selected from the group consisting of $LiCoO_2$, $Li(Ni,Co,Al)O_2$, $Li_{(1+x)}Ni_aMn_bCo_c$ (x represents a real number of 0 or more, a=0.9, 0.8, 0.6, 0.5, or 1/3, b=0.05, 0.1, 0.2, 0.3, or 1/3, c=0.05, 0.1, 0.2, or 1/3), $LiNiO_2$, $LiMn_2O_4$, $LiCoMnO_4$, $Li_3NiMn_3O_3$, $Li_3Fe_2(PO_4)_3$, $Li_3V_2(PO_4)_3$, a different element-substituted Li Mn spinel having a composition represented by $Li_{(1+x)}Mn_{(2-x-y)}M_yO_4$, wherein M represents at least one metal selected from Al, Mg, Co, Fe, Ni, and Zn, x and y independently representing a real number between 0 to 2, lithium titanate $Li_xTiO_y$ wherein x and y independently representing a real number between 0 to 2, and a lithium metal phosphate having a composition represented by $LiMPO_4$, M representing Fe, Mn, Co or Ni.

12. A process to prepare a dry-coated electrode according to anyone of claims 9 to 11 comprising the steps of dry mixing at least one active material, at least one binder, optionally at least one conductive agent to provide an electrode formulation; depositing sad electrode formulation on a substrate by a solvent less process to obtain a Li-ion battery electrode; consolidation of said electrode by thermo-mechanical treatment carried out at a temperature ranging from 50°C below the melting temperature of the binder up to 50°C above the melting temperature of the binder.

13. A process to prepare a dry-coated electrode according to anyone of claims 9 to 11 comprising the steps of dry mixing at least one active material, at least one binder, optionally at least one conductive agent to provide an electrode formulation; processing said electrode formulation at a temperature of from 50°C to 220°C to form a free-standing film, and laminating said free-standing film on a current collector.

14. Li-ion battery comprising a positive electrode, a negative electrode and a separator, wherein at least one of the electrodes is a dry-coated electrode according to any of the previous claims 9 to 11.

## EUROPEAN SEARCH REPORT

**Application Number**

EP 23 30 7356

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/027323 A1 (XU SHAOMAO [US] ET AL) 26 January 2023 (2023-01-26) | 1-3,5-14 | INV.<br>H01M4/62 |
| A | * paragraphs [0040] - [0050], [0054]; claim all * | 4 | H01M4/04<br>H01M4/131<br>H01M4/136 |
| X | US 2023/178738 A1 (UEDA MASASHI [JP] ET AL) 8 June 2023 (2023-06-08) | 1-3,5-14 | H01M4/1391<br>H01M4/1397 |
| A | * paragraphs [0060] - [0070], [0075] - [0080] * | 4 | H01M4/485<br>H01M4/505<br>H01M4/525 |
| X | CN 115 548 461 A (QINGDAO ZHONGKE SAILIDA NEW ENERGY TECH PARTNERSHIP ENTERPRISE LIMITED) 30 December 2022 (2022-12-30) | 1-3,5-14 | |
| A | * claim all * | 4 | |
| X | US 2022/297085 A1 (MEHLMANN FLORENCE [US] ET AL) 22 September 2022 (2022-09-22) | 1-4,7-9,12-14 | |
| A | * paragraphs [0079], [0140], [0152], [0168] - [0174]; claim all * | 5,6,10,11 | |
| X | DE 20 2018 106258 U1 (UNIV RUTGERS [US]) 20 January 2020 (2020-01-20) | 1,3-11,14 | **TECHNICAL FIELDS SEARCHED (IPC)** |
| A | * paragraphs [0054] - [0057], [0079] - [0093]; claim all * | 2,12,13 | H01M |

The present search report has been drawn up for all claims

| Place of search | Date of completion of the search | Examiner |
|---|---|---|
| Munich | 7 May 2024 | Götz, Heide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 30 7356

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2024

| Patent document cited in search report | Publication date | Patent family member(s) | | Publication date |
|---|---|---|---|---|
| US 2023027323 A1 | 26-01-2023 | CN | 115642259 A | 24-01-2023 |
| | | DE 102022109368 A1 | | 26-01-2023 |
| | | US 2023027323 A1 | | 26-01-2023 |
| US 2023178738 A1 | 08-06-2023 | CN | 116230852 A | 06-06-2023 |
| | | DE 102022131899 A1 | | 07-06-2023 |
| | | JP 2023082849 A | | 15-06-2023 |
| | | KR 20230084014 A | | 12-06-2023 |
| | | US 2023178738 A1 | | 08-06-2023 |
| CN 115548461 A | 30-12-2022 | NONE | | |
| US 2022297085 A1 | 22-09-2022 | BR 112021025632 A2 | | 01-02-2022 |
| | | CN 114072227 A | | 18-02-2022 |
| | | EP 3990170 A1 | | 04-05-2022 |
| | | JP 2022539549 A | | 12-09-2022 |
| | | KR 20220025842 A | | 03-03-2022 |
| | | US 2022297085 A1 | | 22-09-2022 |
| | | WO 2020263808 A1 | | 30-12-2020 |
| DE 202018106258 U1 | 20-01-2020 | CN 113348528 A | | 03-09-2021 |
| | | CN 117985700 A | | 07-05-2024 |
| | | DE 202018106258 U1 | | 20-01-2020 |
| | | EP 3867936 A1 | | 25-08-2021 |
| | | JP 2022508711 A | | 19-01-2022 |
| | | KR 20210062093 A | | 28-05-2021 |
| | | TW 202026237 A | | 16-07-2020 |
| | | US 2021403326 A1 | | 30-12-2021 |
| | | WO 2020081531 A1 | | 23-04-2020 |

EPO FORM P0459

For more details about this annex : see Official Journal of the European Patent Office, No. 12/82

# EP 4 576 267 A1

**Patent documents cited in the description**

- US 20190305316 A
- US 20200313193 A